# EUROPÄISCHE PATENTSCHRIFT

(11) **EP 0 765 093 B1**
(45) Veröffentlichungstag und Bekanntmachung des Hinweises auf die Patenterteilung: **18.10.2006**
(21) Anmeldenummer: 96113852.6
(22) Anmeldetag: 29.08.1996
(51) Int. Cl.: H04Q 3/545, H04Q 11/04

(54) **Verfahren zum Erkennen von Überlastsituationen in Teilnehmeranschlussmodulen eines Kommunikationssystems**
Method for detecting overload situations in subscriber connection modules of a communication system
Procédé pour la détection de situations de surcharge dans des modules de raccordement de postes d'abonné d'un système de communication

(30) Priorität: 20.09.1995 DE 19534940
(43) Veröffentlichungstag der Anmeldung: 26.03.1997
(73) Patentinhaber: SIEMENS AKTIENGESELLSCHAFT, 80333 München (DE)
(72) Erfinder: Stevens, Peter, Dipl.Inf., 33378 Rheda-Wiedenbrück (DE); Pusch, Wolfgang, Dipl.-Ing., 33142 Büren (DE)

(56) Entgegenhaltungen:
- EP-A- 0 121 236
- EP-A- 0 316 250
- EP-A- 0 553 753
- GB-A- 2 278 027
- US-A- 4 511 762
- HASSELGREN J ET AL: "HANDLING OVERLOAD IN AXE 10" ERICSSON REVIEW, Bd. 72, Nr. 3, Seite 124-131 XP000543265 STOCKHOLM ISSN: 0014-0171

## Beschreibung

Programmgesteuerte Kommunikationssysteme weisen eine zentrale Steuerung und mit dieser verbundene Teilnehmeranschlußmodule auf, durch die für einen Anschluß von Kommunikationsendgeräten Kommunikationsanschlüsse realisiert sind - siehe auch Hasselgren, J. et al.: 'handling overload in AXE 10', Ericson Review, Bd-72, Nr.3, Seiten 124-131, Stockholm. Beispielsweise stellt ein Teilnehmeranschlußmodul 24 Kommunikationsanschlüsse zur Verfügung, an die zumindest 24 Kommunikationsendgeräte anschließbar sind. Über jeden dieser Kommunikationsanschlüsse ist ein Signalisierungskanal - in der Fachwelt als D-Kanal bekannt - mit beispielsweise einer standardisierten Übertragungskapazität von 16 kBit/s geführt. Über den Signalisierungskanal werden sowohl an das Kommunikationsendgerät als auch an das Kommunikationssystem Signalisierungsnachrichten übermittelt. Durch die vermittlungstechnischen Einstellungen der Bedieneroberfläche der Kommunikationsendgeräte - insbesondere bei Stimulus-Kommunikationsendgeräten - durch das Kommunikationssystem tritt ein erheblich höherer Fluß von Signalisierungsnachrichten vom Kommunikationssystem zu den Kommunikationsendgeräten auf. Dies kann insbesondere bei bestimmten Benutzungen des Kommunikationsendgerätes zu einem überhöhten Fluß von Signalisierungsnachrichten zum Kommunikationsendgerät und damit zu einer Überlastung der Teilnehmeranschlußmodule führen.

Des weiteren weisen die Teilnehmeranschlußmodule jeweils ein Mikroprozessorsystem auf, mit dessen Hilfe die von den in den Teilnehmeranschlußmodulen implementierten Prozessen übermittelten Verarbeitungsanforderungen abgearbeitet werden. Hierbei sind die Prozesse als eigenständige Tasks organisiert, welche bezüglich der Nachrichten-Verarbeitung verschiedene Prioritätsebenen aufweisen. Die Ressource Verarbeitungskapazität des Mikroprozessorsystems ist innerhalb eines Teilnehmeranschlußmoduls für die Nachrichtenverarbeitung bei der Interprozeß-Kommunikation und für die Ressourcen-Verwaltung der weiteren Ressourcen auf dem Teilnehmeranschlußmodul vorgesehen. Eine Überlastung des Mikroprozessorsystems wird sowohl durch eine erhebliche Meldungsflut in Richtung Kommunikationsendgeräte als auch durch die zur zentralen Steuerung zu übermittelnden Meldungen verursacht.

Ein bekanntes Verfahren, die Überlast eines Teilnehmeranschlußmoduls zu ermitteln, ist die Anzahl der noch freien Speicherelemente eines durch das Betriebssystem verwalteten Speicherelementepools heranzuziehen. Die Speicherelemente werden den jeweiligen Prozessen bzw. Tasken für die Zwischenspeicherung von Informationen temporär zugeordnet, d.h. der jeweilige Prozeß kann seine Daten bzw. Informationen auf dem ihm zugeordneten Speicherelementen speichern.

Eine ausschließliche Überwachung des Speicherelementepools für eine Beurteilung der Überlast ist nachteilig, da bei dieser Methode der Überlastzustand zu spät erkannt wird und somit schnell wirkende Gegenmaßnahmen nicht eingeleitet werden können. Das Teilnehmeranschlußmodul wird nach dem Überschreiten einer Überlastschwelle in einen Störzustand gesteuert, der nur durch einen Restart, d.h. einen Reset des Teilnehmeranschlußmoduls aufgehoben werden kann.

Die der Erfindung zugrundeliegende Aufgabe besteht darin, ein Verfahren zum Erkennen einer Überlast eines Teilnehmeranschlußmoduls derart auszugestalten, daß nach einem Erkennen durch gezielte Gegenmaßnahmen ein allgemeiner Störzustand bzw. ein Ausfall des Teilnehmeranschlußmoduls vermieden wird. Die Aufgabe wird durch die Merkmale des Patentanspruchs 1 gelöst.

Der wesentliche Aspekt des erfindungsgemäßen Verfahrens ist darin zu sehen, daß zum Erkennen einer Überlast die Auslastung des Mikroprozessorsystems, der zu den Kommunikationsendgeräten gerichteten Signalisierungskanäle und des Speicherelementepools kontinuierlich gemessen wird und durch Vergleiche der gemessenen Auslastungen mit vorgegebenen Auslastungsgrenzen die Überlastung des Teilnehmeranschlußmoduls erkannt wird. Nach einem Erkennen zumindest zweier oder dreier Überlastungen können gezielte oder pauschale, schnellwirkende Gegenmaßnahmen eingeleitet werden. Eine dieser Gegenmaßnahmen ist beispielsweise darin zu sehen, daß das die Prozessorverarbeitungs-Ressourcen erheblich beeinflussende Bilden und Übermitteln von Signalisierungsnachrichten an die eine Signalisierungsnachrichtenflut verursachenden Kommunikationsgeräte eingeschränkt wird. Hierbei können gezielt diejenigen Kommunikationsendgeräte ermittelt werden - Anspruch 11 - an die die größte Anzahl von Signalisierungsnachrichten aktuell übermittelt wird und eine entsprechende Gegenmaßnahme, nämlich nicht mehr alle Signalisierungsnachrichten zu übertragen, eingeleitet werden. Insbesondere sind dies Signalisierungsnachrichten, die in den Kommunikationsendgeräten optisch oder sprachlich ausgegeben werden - Anspruch 14. Als weitere Gegenmaßnahme können einzelne oder alle Kommunikationsanschlüsse außer Betrieb genommen werden, um eine aktuell anstehende Überlastung des jeweiligen Teilnehmeranschlußmoduls zu vermeiden - Anspruch 16 und 17.

Mehrere Überlastungsstufen werden vorteilhaft durch Vergleiche der gemessenen Auslastungen jeweils mit unterschiedlichen, vorgegebenen Auslastungsgrenzen erkannt - Anspruch 2. Diese Überlaststrategie ist bei einer mehrstufigen Gegenmaßnahmenstrategie sinnvoll, wobei die einzelnen Gegenmaßnahmen einen Teil oder Teile einer Gesamtstrategie repräsentieren.

Gemäß einer vorteilhaften Ausgestaltung des erfindungsgemäßen Verfahrens wird eine Überlastung des Teilnehmeranschlußmoduls bei Überschreiten der gemessenen Auslastungen über die vorgegebenen Auslastungsgrenzen erkannt. Folglich stellt ein Unterschreiten der vorgegebenen Auslastungsgrenzen eine Normalbelastung dar - Anspruch 3. Um extrem kurzfristige Überlastungen und Fehlmessungen zu unterdrücken, ist das Überschreiten oder Unterschreiten von Auslastungsgrenzen nur dann bestimmt, wenn diese innerhalb eines vorgegebenen Zeitintervalls gemessen werden - Anspruch 4.

Vorteilhafterweise wird die Auslastung des Mikroprozessorsystems durch die Anzahl der verarbeiteten Leerlauf-Tasken innerhalb eines vorgegebenen Zeitintervalls bestimmt. Unterschreitet die gemessene Anzahl eine die Auslastungsgrenze repräsentierende vorgegebene Anzahl von Leerlauf-Tasken, ist eine Überlastung des Mikroprozessorsystems erkannt - Anspruch 5. Vorteilhaft wird die Anzahl der Leerlauf-Tasken durch einen Zähler erfaßt - Anspruch 6.

Die Auslastung des Signalisierungskanals wird besonders vorteilhaft durch Bestimmen einer Gesamtnachrichtenlänge gemessen. Hierbei werden die Nachrichtenlängen der einzelnen Signalisierungsnachrichten für jeden Signalisierungskanal erfaßt und zu einer Gesamtnachrichtenlänge summiert. Überschreitet diese Gesamtnachrichtenlänge innerhalb eines Zeitintervalls eine die Auslastungsgrenze repräsentierende Grenznachrichtenlänge, ist die Überlastung durch die Signalisierung zu den Kommunikationsendgeräten erkannt - Anspruch 7.

Ein erster Überlastungszustand eines Teilnehmeranschlußmoduls ist dann bestimmt, wenn innerhalb eines Überlastungsintervalls die Auslastungsgrenzen ständig überschritten werden. Hierbei wird eine den ersten Überlastungszustand anzeigende Meldung gebildet - Anspruch 8. Diese zusätzliche Maßnahme vermeidet das Einleiten von Gegenmaßnahmen bei kurzfristigem Überschreiten einzelner Auslastungsgrenzen und bei einem Erkennen können gezielte Gegenmaßnahmen eingeleitet werden.

Die Überlastung des Speicherelementepools wird in vorteilhafter Weise durch die Messung der noch freien Speicherelemente bestimmt. Hierbei werden die gemessenen freien Speicherelemente mit einer die Auslastungsgrenze repräsentierenden, vorgegebenen Anzahl verglichen und bei Unterschreiten der vorgegebenen Anzahl wird eine Überlastung des Speicherelementepools bestimmt - Anspruch 9. Vorteilhaft wird die Auslastung des Speicherelementepools nach jedem Senden einer Signalisierungsnachricht an ein angeschlossenes Kommunikationsendgerät gemessen - Anspruch 10. Dieser Zeitpunkt ist vorteilhaft, da bei einem evtl. Überschreiten der Auslastungsgrenze ein weiteres Aussenden von Nachrichten vermieden werden kann.

Weitere vorteilhafte Ausgestaltungen des erfindungsgemäßen Verfahrens sind den weiteren Ansprüchen zu entnehmen.

Im folgenden wird das erfindungsgemäße Verfahren anhand eines Blockschaltbildes und von fünf Ablaufdiagrammen erläutert. Dabei zeigen
- FIG 1: eine Programmstruktur eines Teilnehmeranschlußmoduls in einem Kommunikationssystem,
- FIG 2: in einem Ablaufdiagramm die Messung der Prozeßauslastung des Mikroprozessorsystems,
- FIG 3: in einem Ablaufdiagramm die Messung der Signalisierungskanalauslastung,
- FIG 4: in einem Ablaufdiagramm die Messung der Auslastung des Speicherelementepools,
- FIG 5: in einem Ablaufdiagramm die Messung der kommunikationsanschluß-spezifischen Signalisierungskanalauslastung und
- FIG 6: in einem Ablaufdiagramm das Erkennen der Überlast.

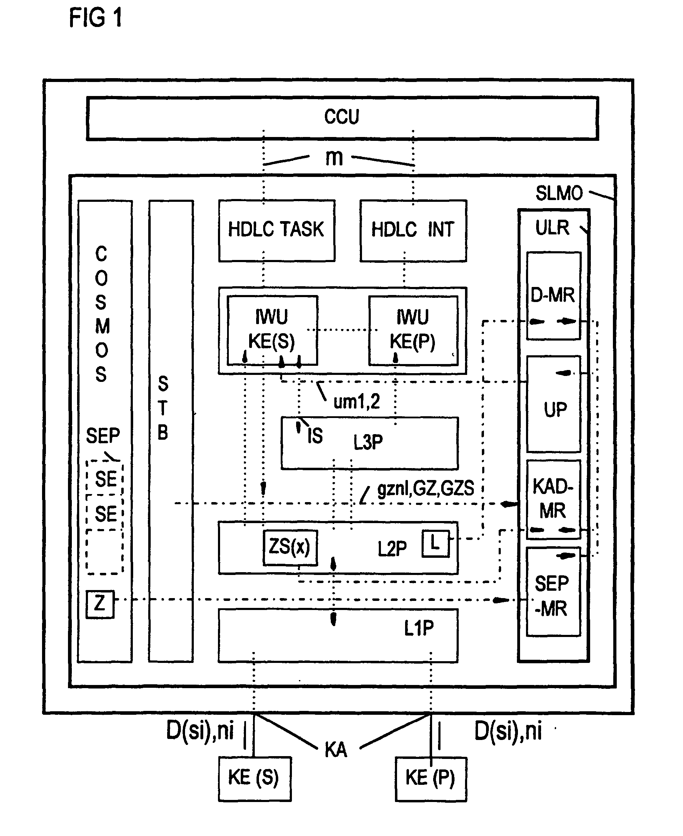

FIG 1 zeigt ein Kommunikationssystem KS, in dem beispielhaft ein Teilnehmeranschlußmodul SLMO dargestellt ist. An das Kommunikationssystem KS bzw. das Teilnehmeranschlußmodul SLMO sind Kommunikationsendgeräte KE anschließbar. Die Kommunikationsendgeräte KE werden im Stimulus-Verfahren (S) - alle Einstellungen des Kommunikationsendgerätes KE werden vom Kommunikationssystem KS aus vorgenommen - oder nach einem Protokoll-Verfahren (P) - nach Übermitteln einer Signalisierungsnachricht si nimmt das Kommunikationsendgerät KE selbständig die Einstellungen vor - betrieben. Die Signalisierungsnachrichten si werden über einen über jeweils einen Kommunikationsanschluß KA geführten Signalisierungskanal D zusammen mit den Nutzinformationen ni - beispielsweise digitalisierte Sprachinformationen - übertragen. Im Kommunikationssystem KS ist das Teilnehmeranschlußmodul SLMO mit einer das Kommunikationssystem KS koordinierende und steuernde Steuereinrichtung CCU verbunden. FIG 1 zeigt weiterhin die Programmstruktur des beispielhaft dargestellten Teilnehmeranschlußmoduls SLMO, wobei in den weiteren nicht dargestellten Teilnehmeranschlußmodulen SLMO eine gleichartige Programmstruktur realisiert ist. Die Programmstruktur ist in verschiedene nachstehend erläuterte Prozesse strukturiert. Die Prozesse sind als eigenständige Tasken organisiert, die bezüglich der Nachrichtenverarbeitung - Nachrichten von der zentralen Steuereinrichtung CCU oder von den Kommunikationsendgeräten KE oder zu diesen - unterschiedliche Prioritätsebenen aufweisen.

Die Kommunikation zwischen der zentralen Steuereinrichtung CCU und dem Teilnehmeranschlußmodul SLMO wird in diesem durch die beiden HDLC-Übertragungsroutinen HDLC TASK, HDLC INT realisiert. Beide HDLC-Übertragungsroutinen HDLC TASK, HDLC INT enthalten Treiberroutinen für den Nachrichtenverkehr, wobei die erste HDLC-Übertragungsroutine HDLC TASK für das Senden von Nachrichten m zu der zentralen Steuereinrichtung CCU und die zweite HDLC-Übertragungsroutine HDLC INT für das Empfangen von Nachrichten m von der zentrale Steuereinrichtung CCU zuständig ist. Im Teilnehmeranschlußmodul SLMO werden die Anforderungen der HDLC-Übertragungsroutinen HDLC TASK, HDLC INT mit höchster Priorität verarbeitet. Die beiden HDLC-Übertragungsroutinen HDLC TASK, HDLC INT kommunizieren mit einem Vorfeld-Device-Handler VDH, in dem eine vermittlungstechnische Vorverarbeitung (Call Processing) der von den Kommunikationsendgeräten KE übermittelten Signalisierungsinformationen si durchgeführt wird. Im Vorfeld-Device-Handler VDH ist ein durch ein Programmmodul IWU-S realisierter Prozeß für die Vorverarbeitung von vermittlungstechnischen Prozeduren eines Stimulus-Kommunikationsendgerätes KE(S) und des weiteren ein durch ein Programm-IWU-SO realisierter Prozeß für die Verarbeitung der vermittlungstechnischen Meldungen eines "Protokoll"-Kommunikationsendgerätes KE(P) - z.B. ein ISDN-Kommunikationsendgerät mit einer SO-Schnittstelle - vorgesehen. Des weiteren ist insbesondere für das Bilden von speziellen Meldungen für die Anzeigeeinrichtungen von Stimulus-Kommunikationsendgeräten KE(S) ein Schicht-3-Programm L3P enthalten, das insbesondere mit dem Programm IWU-S über eine definierte Schnittstelle IS kommuniziert. Das Schicht-3-Programm L3P ist vorzugsweise für das Bilden und das Handling von Anzeigemeldungen für alle an das jeweilige Teilnehmeranschlußmodul SLMO angeschlossene Stimulus-Kommunikationsendgeräte KE(S) vorgesehen, wobei der Informationsinhalt dieser Anzeigemeldungen in den jeweiligen Stimulus-Kommunikationsendgeräten KE in einer Anzeigeeinrichtung optisch angezeigt wird.

In einem weiteren Schicht-2-Programm L2P ist die Schicht 2 gemäß dem OSI-Referenzmodell für Benutzer-Netz-Signalisierung und Informationstransfer sowohl in Richtung zentraler Steuereinrichtung CCU als auch in Richtung der Kommunikationsendgeräte KE realisiert. Diese Schicht 2 übernimmt für die Schicht 3, d.h. die Vermittlungsschicht das gesicherte Übermitteln der Signalisierungsinformationen si in beide Richtungen.

Das Schicht-2-Programm L2P kommuniziert mit einem Schicht-1-Programm L1P, das das Bindeglied zu den schaltungstechnischen Übertragungs- und Stromversorgungseinrichtungen für die jeweilig angeschlossenen Kommunikationsendgeräte KE darstellt. Durch dieses Schicht-1-Programm L1P werden die Kommunikationsanschlüsse KA aktiviert und deaktiviert, Testschleifen gesteuert sowie ein Powermanagement durchgeführt.

Für die Verwaltung und den Betrieb der Mikroprozessorsystem-Ressourcen ist ein Betriebssystem COSMOS realisiert. Durch dieses Betriebssystem COSMOS werden auch die Speicherelemente SE eines Speicherelementepools SEP verwaltet und den jeweiligen Prozessen bzw. Programmodulen nach entsprechender Anforderung - insbesondere bei der Nachrichtenverarbeitung - temporär zugeteilt - der Speicherelementepool SEP mit seinen Speicherelementen SE ist durch ein strichliertes Rechteck im Betriebssystemblock angedeutet. Des weiteren ist im Betriebssystem COSMOS ein Zähler Z vorgesehen, mit dessen Hilfe die noch freien Speicherelemente SE des Speicherelementepools SEP gezählt werden.

Für die betriebstechnische Steuerung, d.h. die betriebstechnischen Einstellungen des Teilnehmeranschlußmoduls SLMO ist ein Sicherungs- und Betriebstechnikprogrammodul STB vorgesehen. Von diesem Betriebstechnikprogrammodul STB werden auch alle Betriebsparameter hinsichtlich der für die Überlasterkennung erforderlichen Auslastungsgrenzen zur Verfügung gestellt. Dies sind insbesondere Betriebsparameter über eine Mikroprozessorsystem-Auslastungsgrenze GZS, die Grenzgesamtnachrichtenlänge gznl, und der Intervallzeiten IV sowie einer Speicherelementepool-Auslastungsgrenze GZ.

Des weiteren werden im Schicht-2-Programm L2P die Nachrichtenlängen L der jeweils in Richtung Kommunikationsendgerät KE zu übermittelnden Signalisierungsnachrichten si festgestellt und an eine Überlastroutine URL übermittelt. Für das Erkennen des Überlastzustandes weist die Überlastroutine URL eine Speicherelementepool-Meßroutine SEP-MR, eine Signalisierungskanal-Meßroutine D-MR, ein Überlastprogramm UP sowie eine kommunikationsanschlußbezogene Signalisierungskanal-Meßroutine KAD-MR auf. Der Überlaststatus wird insbesondere dem durch das Programm IWU-S realisierten Prozeß für die Steuerung von Stimulus-Kommunikationsendgeräten KE(S) durch Stufe1- und Stufe2-Überlastmeldungen um1,2 mitgeteilt. Durch Übermitteln der Überlastmeldungen um1,2 wird das Aussenden von Anzeigemeldungen an einzelne, besonders überlastete Kommunikationsanschlüsse KA oder an alle oder das Aussenden aller Signalisierungsmeldungen si an einzelne oder besonders überlastete Kommunikationsanschlüsse KA unterbunden.

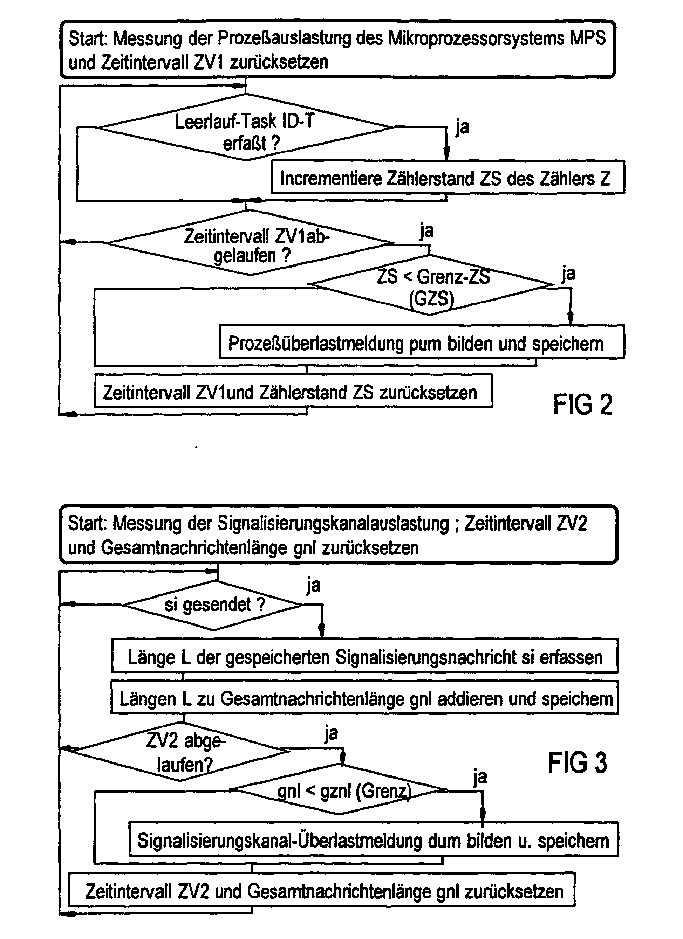

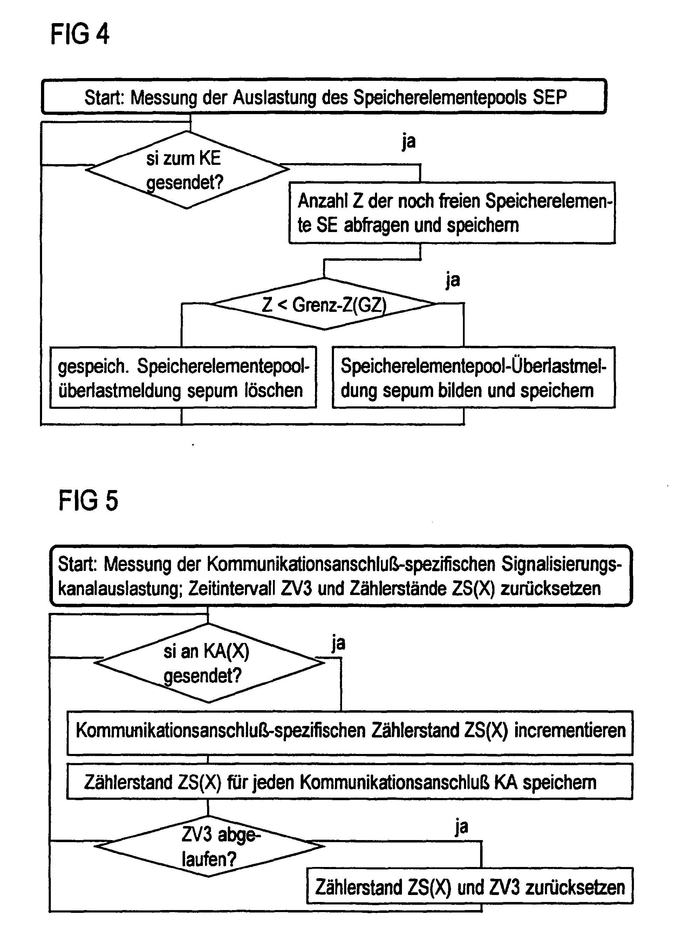

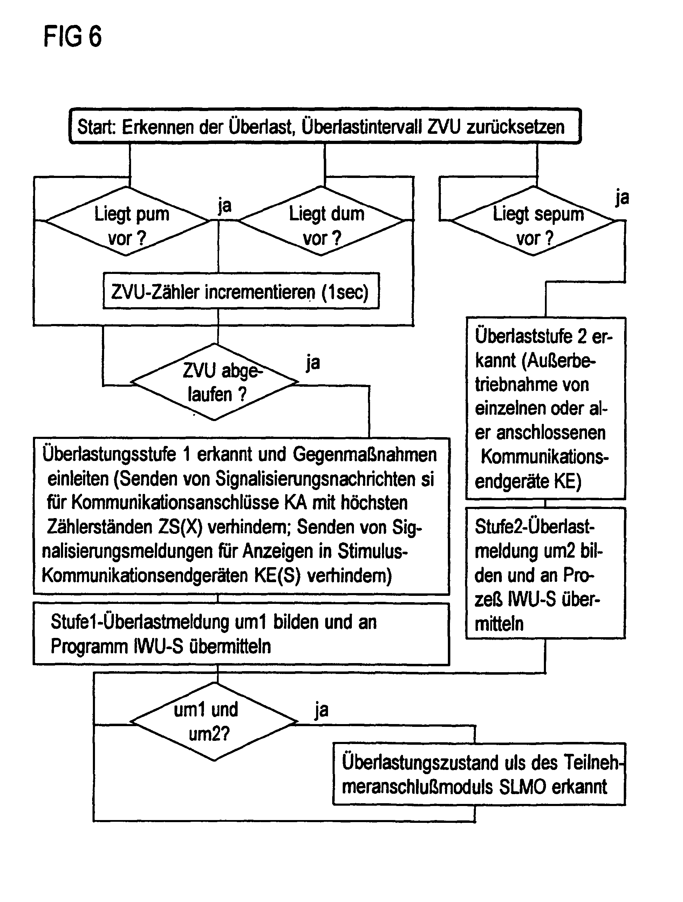

Die in den Meßroutinen D-MR, SEP-MR und im Überlastprogramm UP realisierten Verfahren sind in den FIG 2 bis 6 dargestellt. Die jeweiligen Ablaufdiagramme sind im wesentlichen sich selbst erläuternd und zeigen insbesondere die zur Erkennung einer Überlast führenden Verfahrensschritte bezüglich einer Messung der Prozeßauslastung des Mikroprozessors MPS, der Messung der Signalisierungskanalauslastung, der Messung der Auslastung des Speicherelementepools SEP, der Messung der kommunikationsanschluß-spezifischen Signalisierungskanalauslastung und einem Erkennen der Überlast einschließlich unterschiedlicher Überlastungsstufen. In FIG 6 ist das Umstellen bzw. das Zurückstellen auf den nicht überlasteten Zustand des Teilnehmernanschlußmoduls SLMO nicht dargestellt, wobei bei einem nicht ständigen Vorliegen der Überlastung des Mikroprozessorsystems MPS und des Signalisierungskanals D während des Überlastungsintervalls ZVU eine die Rücksetzung der ersten Überlaststufe bewirkende Rücksetzmeldung rsm gebildet und an den durch das Programmodul IWU-S realisierten Prozeß übermittelt wird. Analog hierzu wird bei Nicht-Vorliegen einer Speicherelementepool-Überlastmeldung sepum eine die Rücksetzung der zweiten Überlastungsstufe bewirkende Rucksetzmeldung rsm gebildet und an die betroffenen Einheiten übermittelt. Liegt keine die Überlastung anzeigende Meldung um1,2 vor, wird folglich auch kein Überlastungszustand des Teilnehmeranschlußmodul SLMO gemeldet, d.h. das Teilnehmeranschlußmodul SLMO befindet sich im Normalbetrieb. In FIG 6 ist dieser Zusammenhang durch die Bezeichnung rsm angedeutet, wobei jedoch unterschiedliche Verfahrensabläufe - nicht dargestellt - zu berücksichtigen sind.

## Patentansprüche

1. Verfahren zum Erkennen von Überlastsituationen von Teilnehmeranschlußmodulen (SLMO), an deren Kommunikationsanschlüsse (KA) Kommunikationsendgeräte (KE) angeschlossen sind und die mit einer zentralen Steuerung (CCU) eines Kommunikationssystems (KS) verbunden sind, wobei in den Teilnehmernanschlußmodulen (SLMO) ein Mikroprozessorsystem (MPS) für die Bearbeitung von in Tasken organisierte Vermittlungs- und Betriebsprozessen vorgesehen ist,
- bei dem an die angeschlossenen Kommunikationsendgeräte (KE) zu übermittelnde Signalisierungsnachrichten (si) gebildet und über kommunikationsanschlußindividuelle Signalisierungskanäle (D) übermittelt werden,
- bei dem für die Interprozeßkommunikation und eine Ressourcen-verwaltung den Prozessen temporär Speicherelemente (SE) aus einem vom Betriebssystem bereitgestellten Speicherelementepool (SEP) zugeteilt werden,
- bei dem
-- die Auslastung des Mikroprozessorsystems (MPS),
-- die Auslastung aller Signalisierungskanäle (D) und
-- die Auslastung des Speicherelementepools (SEP) gemessen wird, und
- bei dem die gemessenen Auslastungen (Z,ZS,ZS (X),gnl) mit vorgegebenen Auslastungsgrenzen (GZ,GZS,gznl) verglichen werden und in Abhängigkeit von den Vergleichsergebnissen die Überlastung des Teilnehmernanschlußmoduls (SLMO) erkannt wird.

2. Verfahren nach Anspruch 1, **dadurch gekennzeichnet, daß** mehrere Überlastungsstufen durch Vergleiche der gemessenen Auslastungen (Z,ZS,ZS(X),gnl) jeweils mit unterschiedlichen, vorgegebenen Auslastungsgrenzen (GZ,GZS,gznl) erkannt werden.

3. Verfahren nach Anspruch 1 oder 2, **dadurch gekennzeichnet, daß** bei Überschreiten oder Unterschreiten der gemessenen Auslastungen (Z,ZS,ZS(X), gnl) über die vorgegebenen Auslastungsgrenzen (GZ,GZS,gznl) eine Überlastung und bei Unterschreiten bzw. Überschreiten der gemessenen Auslastungen unter die vorgegebene Auslastungsgrenzen (Z,ZS,ZS(X),gnl) eine Normalbelastung des Teilnehmernanschlußmoduls (SLMO) erkannt wird.

4. Verfahren nach Anspruch 3, **dadurch gekennzeichnet, daß** ein Überschreiten oder Unterschreiten der Auslastungsgrenzen (GZ,GZS,gznl) durch ein Überschreiten oder Unterschreiten der gemessenen Auslastungen (Z,ZS,ZS(X),gnl) über oder unter die vorgegebenen Auslastungsgrenzen (GZ,GZS,gznl) innerhalb von vorgegebenen Zeitintervallen (ZV1..3) bestimmt ist.

5. Verfahren nach einem der vorhergehenden Ansprüche, **dadurch gekennzeichnet, daß** im Sinne einer Bestimmung der Auslastung des Mikroprozessorsystems (MPS) die Anzahl der durch das Mikroprozessorsystem (MPS) verarbeiteten Leerlauf-Tasken (ID-T) innerhalb eines vorgegebenen Zeitintervalls (ZV1) gemessen wird, daß die Auslastungsgrenze (GZS) durch eine vorgegebene Anzahl (GZS) von Leerlauf-Tasken (ID-T) bezogen auf das vorgegebene Zeitintervall (ZV1) bestimmt ist, und daß ein Überschreiten oder Unterschreiten der Auslastungsgrenze (GZS) durch ein Überschreiten oder Unterschreiten der gemessenen Anzahlen (GZS) von Leerlauf-Tasken (ID-T) über oder unter eine vorgegebene Anzahl (GZS) von Leerlauf-Tasken (ID-T) bestimmt ist.

6. Verfahren nach Anspruch 5, **dadurch gekennzeichnet, daß** bei der Abarbeitung einer Leerlauf-Task (ID-T) ein Zähler (Z) incrementiert wird, wobei nach jedem Zeitintervall (ZV1) der Zählerstand ZS des Zählers (Z) gespeichert und der Zähler (Z) auf einen definierten Zählerstand ZS zurückgesetzt wird.

7. Verfahren nach einem der vorhergehenden Ansprüche, **dadurch gekennzeichnet, daß** im Sinne einer Bestimmung der Auslastung der zu den Kommunikationsendgeräten (KE) gerichteten Signalisierungskanäle (D) die Längen (L) aller Signalisierungsnachrichten (si) in einem vorgegebenen Zeitintervall (ZV2) erfaßt und zu einer Gesamtnachrichtenlänge (gnl) summiert werden, daß die Auslastungsgrenze durch eine auf das Zeitintervall (ZV2) bezogene Grenznachrichtenlänge (gnl) bestimmt ist und daß ein Überschreiten oder Unterschreiten der Auslastungsgrenze durch ein Überschreiten oder Unterschreiten der gemessenen Gesamtlänge (gnl) über oder unter eine vorgegebene Grenznachrichtenlänge (gznl) bestimmt ist.

8. Verfahren nach einem der Ansprüche 5 bis 7, **dadurch gekennzeichnet, daß** bei einem ständigen Überschreiten oder Unterschreiten der Auslastungsgrenzen (GZS,gznl) innerhalb eines Überlastungsintervalls (ZV1,2) eine einen ersten Überlastungszustand anzeigende Meldung (um1) gebildet wird.

9. Verfahren nach einem der vorhergehenden Ansprüche, **dadurch gekennzeichnet, daß** im Sinne einer Bestimmung der Auslastung des Speicherelementepools (SEP) die Anzahl der noch freien Speicherelemente (SE) gemessen wird, daß die Auslastungsgrenze durch eine vorgegebene Anzahl (GZ) von noch freien Speicherelementen (SE) bestimmt ist und daß ein Überschreiten oder Unterschreiten der Auslastungsgrenze durch ein Unterschreiten oder Überschreiten der gemessenen Anzahl (Z) von noch freien Speicherelementen (SE) unter oder über die vorgegebene Anzahl (GZ) von noch freien Speicherelementen (SE) bestimmt ist.

10. Verfahren nach Anspruch 9, **dadurch gekennzeichnet, daß** die Anzahl (Z( der noch freien Speicherelemente (SE) nach jedem Senden einer Signalisierungsnachricht (si) an ein angeschlossenes Kommunikationsendgerät (KE) gemessen wird.

11. Verfahren nach einem der vorhergehenden Ansprüche, **dadurch gekennzeichnet, daß** zusätzlich jeweils die Anzahl (ZS(X)) der über einen Signalisierungskanals (D) eines Kommunikationsanschlusses (KA) zu einem Kommunikationsendgerät (KE) übermittelten Signalisierungsnachrichten (si) in vorgegebenen Zeitintervallen (ZV3) gezählt werden und jeweils die Kommunikationsanschlüsse (KA) mit den höchsten Anzahlen (ZS(X)) gespeichert werden.

12. Verfahren nach einem der vorhergehenden Ansprüche, **dadurch gekennzeichnet, daß** nach einem Erkennen einer Überlastung oder einer Überlastungsstufe von mehreren Überlastungsstufen des Teilnehmernanschlußmoduls (SLMO) zumindest eine die Überlastung reduzierende Maßnahme eingeleitet wird.

13. Verfahren nach Anspruch 12, **dadurch gekennzeichnet, daß** nach einem Erkennen eines Überlastzustandes bezüglich des Mikroprozessorsystems (MPS) und des Signalisierungskanals (D) eine erste Stufe einer die Überlastung reduzierende Maßnahme und bei einem Erkennen der Uberlastung hinsichtlich der noch freien Speicherelemente (SE) des Speicherelementepools (SEP) eine zweite Stufe einer die Überlastung reduzierende Maßnahme eingeleitet wird.

14. Verfahren nach Anspruch 12 oder 13, **dadurch gekennzeichnet, daß** bei einer eine erste Stufe einer die Überlastung reduzierenden Maßnahme in den Kommunikationsendgeräten (KE) optisch oder sprachlich auszugebende Signalisierungsnachrichten (si) an stark überlastete einzelne oder mehrere Kommunikationsendgeräte (KE) nicht mehr ausgesandt werden.

15. Verfahren nach Anspruch 11 und 14, **dadurch gekennzeichnet, daß** die Signalisierungsnachrichten (si) der Kommunikationsanschlüsse (KA) unterdrückt werden, über die aktuell die höchste Anzahl (ZS (X)) von Signalisierungsnachrichten (si) übermittelt werden.

16. Verfahren nach Anspruch 12 bis 14, **dadurch gekennzeichnet, daß** die zweite Stufe einer die Überlastung reduzierende Maßnahme durch die Außerbetriebnahme einzelner oder mehrere Kommunikationsanschlüsse (KA) realisiert ist.

17. Verfahren nach Anspruch 11 und 16, **dadurch gekennzeichnet, daß** die Kommunikationsanschlüsse (KA) außer Betrieb genommen werden, über die aktuell die höchste Anzahl (ZS(X)) von Signalisierungsnachrichten (si) übermittelt werden.

18. Verfahren nach einem der vorhergehenden Ansprüche, daß bei nach einem weiteren Erkennen einer Uberlastung nach einem Durchführen von die Überlastungen reduzierenden Maßnahmen ein Restart oder Neustart des Teilnehmernanschlußmodul (SLMO) eingeleitet wird.

## Claims

1. Method for detecting overload situations of subscriber connection modules (SLMO), to whose communication connections (KA) communication terminals (KE) are connected, and which are connected to a central controller (CCU) of a communication system (KS), whereby a microprocessor system (MPS) is provided in the subscriber connection modules (SLMO) for the processing of switching and operational processes organized into tasks,
- in which signalling messages (si) which are to be transferred to the connected communication terminals (KE) are formed and are transferred via communication-connection-individual signalling channels (D),
- in which memory elements (SE) from a memory element pool (SEP) provided by the operating system are temporarily allocated to the processes for inter-process communication and resource management,
- in which
-- the utilization of the microprocessor system (MPS),
-- the utilization of all signalling channels (D), and
-- the utilization of the memory element pool (SEP) are measured, and
- in which the measured utilizations (Z,ZS,ZS(X),gnl) are compared with predefined utilization limits (GZ,GZS,gznl) and, depending on the results of the comparison, the overloading of the subscriber connection module (SLMO) is detected.

2. Method according to Claim 1, **characterized in that** a plurality of overload steps are detected through comparisons of the measured utilizations (Z,ZS,ZS(X), gnl) in each case with different, predefined utilization limits (GZ,GZS,gznl).

3. Method according to Claim 1 or 2, **characterized in that**, in the event of exceeding or understepping of the measured utilizations (Z,ZS,ZS(X),gnl) above the predefined utilization limits (GZ,GZS,gznl), an overloading is detected, and, in the event of understepping or exceeding of the measured utilizations below the predefined utilization limits (Z,ZS, ZS(X),gnl), a normal loading of the subscriber connection module (SLMO) is detected.

4. Method according to Claim 3, **characterized in that** an exceeding or understepping of the utilization limits (GZ,GZS,gznl) through an exceeding or understepping of the measured utilizations (Z,ZS,ZS(X),gnl) above or below the predefined utilization limits (GZ,GZS,gznl) is identified within predefined time intervals (ZV1..3).

5. Method according to one of the preceding claims, **characterized in that**, for the purpose of identifying the utilization of the microprocessor system (MPS), the number of dummy tasks (ID-T) processed by the microprocessor system (MPS) is measured within a predefined time interval (ZV1), the utilization limit (GZS) is identified by means of a predefined number (GZS) of dummy tasks (ID-T) in relation to the predefined time interval (ZV1), and an exceeding or understepping of the utilization limit (GZS) is identified by means of an exceeding or understepping of the measured numbers (GZS) of dummy tasks (ID-T) above or below a predefined number (GZS) of dummy tasks (ID-T).

6. Method according to Claim 5, **characterized in that**, in the processing of a dummy task (ID-T), a counter (Z) is incremented, whereby, after each time interval (ZV1), the counter reading ZS of the counter (Z) is stored and the counter (Z) is reset to a defined counter reading ZS.

7. Method according to one of the preceding claims, **characterized in that**, for the purpose of identifying the utilization of the signalling channels (D) routed to the communication terminals (KE), the lengths (L) of all signalling messages (si) are recorded in a predefined time interval (ZV2) and are added together to form a total message length (gnl), the utilization limit is identified by means of a limit message length (gnl) related to the time interval (ZV2), and an exceeding or understepping of the utilization limit is identified by means of an exceeding or understepping of the measured total length (gnl) above or below a predefined limit message length (gznl).

8. Method according to one of Claims 5 to 7, **characterized in that**, in the event of constant exceeding or understepping of the utilization limits (GZS,gnl) within an overload interval (ZV1,2), a message (um1) indicating a first overload condition is formed.

9. Method according to one of the preceding claims, **characterized in that**, for the purpose of identifying the overload of the memory element pool (SEP), the number of free memory elements (SE) is measured, the utilization limit is identified by means of a predefined number (GZ) of free memory elements (SE), and an exceeding or understepping of the utilization limit is identified by means of an understepping or exceeding of the measured number (Z) of free memory elements (SE) below or above the predefined number (GZ) of free memory elements (SE).

10. Method according to Claim 9, **characterized in that** the number (Z) of free memory elements (SE) is measured after each transmission of a signalling message (si) to a connected communication terminal (KE).

11. Method according to one of the preceding claims, **characterized in that** the number (ZS(X)) of signalling messages (si) transmitted via a signalling channel (D) of a communication connection (KA) to a communication terminal (KE) is in each case also counted in predefined time intervals (ZV3) and the communication connections (KA) with the highest numbers (ZS(X)) are in each case stored.

12. Method according to one of the preceding claims, **characterized in that**, following a detection of an overload or an overload step of a plurality of overload steps of the subscriber connection module (SLMO), at least one measure reducing the overload is instigated.

13. Method according to Claim 12, **characterized in that**, following a detection of an overload condition in relation to the microprocessor system (MPS) and the signalling channel (D), a first step of a measure reducing the overload is instigated, and, in the event of detection of the overloading in relation to the free memory elements (SE) of the memory element pool (SEP), a second step of a measure reducing the overload is instigated.

14. Method according to Claim 12 or 13, **characterized in that**, in the event of a first step of a measure reducing the overload in the communication terminals (KE), signalling messages (si) which are to be output visually or audibly are no longer transmitted to severely overloaded individual or pluralities of communication terminals (KE).

15. Method according to Claims 11 and 14, **characterized in that** the signalling messages (si) of the communication connections (KA) via which the highest number (ZS(X)) of signalling messages (si) are currently being transferred are suppressed.

16. Method according to Claims 12 to 14, **characterized in that** the second step of a measure reducing the overload is implemented by taking individual or pluralities of communication connections (KA) out of operation.

17. Method according to Claims 11 and 16, **characterized in that** the communication connections (KA) via which the highest number (ZS(X)) of signalling messages (si) are currently being transferred are taken out of operation.

18. Method according to one of the preceding claims, **characterized in that**, following a further detection of an overloading following a performance of measures reducing the overloadings, a restart or reboot of the subscriber connection module (SLMO) is instigated.

## Revendications

1. Procédé de détection de situations de surcharge de modules de raccordement d'abonné (SLMO) aux raccordements de communication (KA) desquels des terminaux de communication (KE) sont raccordés et qui sont reliés à une commande centrale (CCU) d'un système de communication (KS), un système microprocesseur (MPS) destiné au traitement de processus de commutation et d'exploitation organisés en tâches étant prévu dans les modules de raccordement d'abonné (SLMO),
- dans lequel on forme des informations de signalisation (si) à transmettre aux terminaux de communication raccordés (KE) et on les transmet par l'intermédiaire de canaux de signalisation (D) propres aux raccordements de communication,
- dans lequel, pour la communication entre processus et pour une gestion de ressources, on attribue temporairement aux processus des éléments de mémorisation (SE) issus d'un groupe d'éléments de mémorisation (SEP) fourni par le système d'exploitation,
- dans lequel on mesure
-- la charge du système microprocesseur (MPS),
-- la charge de tous les canaux de signalisation (D) et
-- la charge du groupe d'éléments de mémorisation (SEP), et
- dans lequel on compare les charges mesurées (Z, ZS, ZS (X), gnl) à des limites de charge prescrites (GZ, GZS, gznl) et on détecte la surcharge du module de raccordement d'abonné (SLMO) en fonction des résultats de comparaison.

2. Procédé selon la revendication 1, **caractérisé par le fait que** l'on détecte plusieurs niveaux de surcharge en comparant les charges mesurées (Z, ZS, ZS (X), gnl) à chaque fois à des limites de charge prescrites (GZ, GZS, gznl) différentes.

3. Procédé selon la revendication 1 ou 2, **caractérisé par le fait que**, lorsque les charges mesurées (Z, ZS, ZS (X), gnl) passent au-dessus des limites de charge prescrites (GZ, GZS, gznl), on détecte une surcharge et, lorsque les charges mesurées (Z, ZS, ZS (X), gnl) passent au-dessous des limites de charge prescrites, on détecte une charge normale du module de raccordement d'abonné (SLMO).

4. Procédé selon la revendication 3, **caractérisé par le fait qu'**un dépassement des limites de charge (GZ, GZS, gznl) est déterminé par un dépassement des charges mesurées (Z, ZS, ZS (X), gnl) au-dessus ou au-dessous des limites de charge prescrites (GZ, GZS, gznl) pendant des intervalles de temps prescrits (ZV1 à ZV3).

5. Procédé selon l'une des revendications précédentes, **caractérisé par le fait que**, en vue d'une détermination de la charge du système microprocesseur (MPS), on mesure le nombre des tâches à vide (ID-T) traitées par le système microprocesseur (MPS) pendant un intervalle de temps prescrit (ZV1), que la limite de charge (GZS) est déterminée par un nombre prescrit (GZS) de tâches à vide (ID-T) par rapport à l'intervalle de temps prescrit (ZV1) et qu'un dépassement de la limite de charge (GZS) est déterminé par un dépassement des nombres mesurés (GZS) de tâches à vide (ID-T) au-dessus ou au-dessous d'un nombre prescrit (GZS) de tâches à vide (ID-T).

6. Procédé selon la revendication 5, **caractérisé par le fait que**, lors de l'exécution d'une tâche à vide (ID-T), on incrémente un compteur (Z) sachant que, après chaque intervalle de temps (ZV1), l'état ZS du compteur (Z) est mémorisé et le compteur (Z) est remis à un état de compteur défini ZS.

7. Procédé selon l'une des revendications précédentes, **caractérisé par le fait que**, en vue d'une détermination de la charge des canaux de signalisation (D) dirigés vers les terminaux de communication (KE), on détecte les longueurs (L) de toutes les informations de signalisation (si) dans un intervalle de temps (ZV2) et on les additionne pour former une longueur totale d'informations (gnl), que la limite de charge est déterminée par une longueur limite d'informations (gnl) par rapport à l'intervalle de temps (ZV2) et qu'un dépassement de la limite de charge est déterminé par un dépassement de la longueur totale mesurée (gnl) au-dessus ou au-dessous d'une longueur limite d'informations prescrite (gznl).

8. Procédé selon l'une des revendications 5 à 7, **caractérisé par le fait que**, lors d'un dépassement permanent des limites de charge (GZS, gznl) pendant un intervalle de surcharge (ZV1, 2), on forme un message (um1) indiquant un premier état de surcharge.

9. Procédé selon l'une des revendications précédentes, **caractérisé par le fait que**, en vue d'une détermination de la charge du groupe d'éléments de mémorisation (SEP), on mesure le nombre des éléments de mémorisation (SE) encore libres, que la limite de charge est déterminée par un nombre prescrit (GZ) d'éléments de mémorisation (SE) encore libres et qu'un dépassement de la limite de charge est déterminé par un dépassement du nombre mesuré (Z) d'éléments de mémorisation (SE) encore libres au-dessous ou au-dessus du nombre prescrit (GZ) d'éléments de mémorisation (SE) encore libres.

10. Procédé selon la revendication 9, **caractérisé par le fait que** l'on mesure le nombre (Z) des éléments de mémorisation (SE) encore libres après chaque émission d'une information de signalisation (si) à un terminal de communication raccordé (KE).

11. Procédé selon l'une des revendications précédentes, **caractérisé par le fait que**, en plus, on compte à chaque fois le nombre (ZS (X)) des informations de signalisation (si) transmises à un terminal de communication (KE) par l'intermédiaire d'un canal de signalisation (D) d'un raccordement de communication (KA) dans des intervalles de temps prescrits (ZV3) et que, à chaque fois, on mémorise les raccordements de communication (KA) ayant les plus grands nombres (ZS (X)).

12. Procédé selon l'une des revendications précédentes, **caractérisé par le fait que**, après la détection d'une surcharge ou d'un niveau de surcharge parmi plusieurs niveaux de surcharge du module de raccordement d'abonné (SLMO), on déclenche au moins une mesure réduisant la surcharge.

13. Procédé selon la revendication 12, **caractérisé par le fait que**, après la détection d'un état de surcharge concernant le système microprocesseur (MPS) et le canal de signalisation (D), on déclenche un premier niveau d'une mesure réduisant la surcharge et, lors de la détection d'une surcharge concernant les éléments de mémorisation (SE) encore libres du groupe d'éléments de mémorisation (SEP), on déclenche un deuxième niveau d'une mesure réduisant la surcharge.

14. Procédé selon la revendication 12 ou 13, **caractérisé par le fait que**, lors d'un premier niveau d'une mesure réduisant la surcharge, on n'émet plus d'informations de signalisation (si) à délivrer visuellement ou vocalement dans les terminaux de communication (KE) à des terminaux de communication (KE) individuels fortement surchargés ou à plusieurs terminaux de communication (KE) fortement surchargés.

15. Procédé selon les revendications 11 et 14, **caractérisé par le fait que** l'on bloque les informations de signalisation (si) des raccordements de communication (KA) par l'intermédiaire desquels on transmet actuellement le plus grand nombre (ZS (X)) d'informations de signalisation (si).

16. Procédé selon les revendications 12 à 14,
**caractérisé par le fait que** le deuxième niveau d'une mesure réduisant la surcharge est réalisé par la mise hors service de raccordements de communication (KA) individuels ou de plusieurs raccordements de communication (KA).

17. Procédé selon les revendications 11 et 16, **caractérisé par le fait que** l'on met hors service les raccordements de communication (KA) par l'intermédiaire desquels on transmet actuellement le plus grand nombre (ZS (X)) d'informations de signalisation (si).

18. Procédé selon l'une des revendications précédentes, **caractérisé par le fait que**, lors d'une nouvelle détection d'une surcharge après la mise en oeuvre de mesures réduisant les surcharges, on déclenche un redémarrage du module de raccordement d'abonné (SLMO).
